(19) Europäisches Patentamt
European Patent Office
Office européen des brevets

(11) **EP 4 033 690 B1**

(12) **EUROPEAN PATENT SPECIFICATION**

(45) Date of publication and mention of the grant of the patent:
**13.11.2024 Bulletin 2024/46**

(21) Application number: **22161597.4**

(22) Date of filing: **21.09.2017**

(51) International Patent Classification (IPC):
**H04L 5/00** $^{(2006.01)}$     **H04L 1/1812** $^{(2023.01)}$
**H04L 1/1829** $^{(2023.01)}$

(52) Cooperative Patent Classification (CPC):
**H04L 5/0053;** H04L 1/1819; H04L 1/1845

(54) **USER TERMINAL AND SYSTEM**

BENUTZERENDGERÄT UND SYSTEM

TERMINAL D'UTILISATEUR ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2016 JP 2016184786**

(43) Date of publication of application:
**27.07.2022 Bulletin 2022/30**

(62) Document number(s) of the earlier application(s) in accordance with Art. 76 EPC:
**17853107.5 / 3 518 592**

(73) Proprietor: **NTT DOCOMO, INC.**
**Chiyoda-Ku**
**Tokyo 100-6150 (JP)**

(72) Inventors:
• **TAKEDA, Kazuki**
 **Tokyo, 100-6150 (JP)**
• **TAKEDA, Kazuaki**
 **Tokyo, 100-6150 (JP)**
• **NAGATA, Satoshi**
 **Tokyo, 100-6150 (JP)**

• **WANG, Lihui**
 **Beijing, 100190 (CN)**
• **MU, Qin**
 **Beijing, 100190 (CN)**

(74) Representative: **Hoffmann Eitle**
**Patent- und Rechtsanwälte PartmbB**
**Arabellastraße 30**
**81925 München (DE)**

(56) References cited:
**WO-A2-2016/122242     US-A1- 2018 014 283**

• **EINHAUS M ET AL: "Performance Study of an Enhanced Downlink Control Channel Design for LTE", 2012 IEEE 75TH VEHICULAR TECHNOLOGY CONFERENCE (VTC SPRING 2012) : YOKOHAMA, JAPAN, 6 - 9 MAY 2012, IEEE, PISCATAWAY, NJ, 6 May 2012 (2012-05-06), pages 1 - 5, XP032202517, ISBN: 978-1-4673-0989-9, DOI: 10.1109/VETECS.2012.6240100**

**Description**

Technical Field

The present invention relates to a computer apparatus and a corresponding system.

Background Art

In the UMTS (Universal Mobile Telecommunications System) network, the specifications of long-term evolution (LTE) have been drafted for the purpose of further increasing high speed data rates, providing lower delays and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT (New Radio Access Technology))," "LTE Rel. 14," "LTE Rel. 15 (or later versions)," and so on) are under study for the purpose of achieving further broadbandization and increased speed beyond LTE.

In existing LTE systems (for example, LTE Rel. 13 or earlier versions), downlink (DL) and/or uplink (UL) communication are carried out using transmission time intervals (TTIs) (also referred to as "subframes") of 1 ms. This 1-ms TTI is the unit of time it takes to transmit one channel-encoded data packet, and is the processing unit in, for example, scheduling, link adaptation, retransmission control (HARQ-ACK (Hybrid Automatic Repeat reQuest-ACKnowledgment)) and so on.

Furthermore, in existing LTE systems, in a TTI for a certain carrier (CC (Component Carrier), cell and/or the like), a time domain for a DL control channel (for example, PDCCH (Physical Downlink Control CHannel), and a time domain for a DL data channel (for example, PDSCH (Physical Downlink Shared CHannel), which is also referred to as a "DL shared channel," "DL data" and so on) that is scheduled by downlink control information (DCI) transmitted in the DL control channel are provided. In the time domain for a DL control channel, the DL control channel may be arranged throughout the system band.

Furthermore, in existing LTE systems, in a TTI for a given carrier, a UL control channel (for example, PUSCH (Physical Uplink Control CHannel)) for communicating uplink control information (UCI) is placed in regions at both edges of the system band, and a UL data channel (for example, PUSCH (Physical Uplink Shared CHannel)) is placed in regions apart from these edge regions.

In the paper entitled "Performance Study of an Enhanced Downlink Control Channel Design for LTE" (2012 IEEE 75TH VEHICULAR TECHNOLOGY CONFERENCE (VTC SPRING 2012), pages 1-5), Einhaus M., et al disclose features of new control channel designs facilitating frequency-selective allocation and precoding for the transmission of downlink control information and provide a detailed performance comparison between the conventional control channel design and the enhanced one.

WO 2016/122242 A1 discloses a search space for a user equipment that can be set over a plurality of subframes. The starting positions of the starting subframe of the search space and a control channel for the user equipment may be different. The start of the search space is limited to a set of specific subframes. The search space may occur cyclically. The cycle of the search space is pre-fixed, or may be set for the user equipment by means of system information or an upper layer signal.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

Summary of Invention

Technical Problem

Future radio communication systems (for example, LTE Rel. 14 or 15, 5G, NR, etc.) are expected to realize low latency (also referred to as "latency reduction," etc.) and/or high-efficiency control. However, when a clear distinction is drawn between the time domain for a DL control channels (for example, PDCCH) and the time domain for DL data channels (for example, PDSCH) within a TTI, as in existing LTE systems, unoccupied resources may be produced in the time domain for a DL control channel, and there is a possibility that radio resources cannot be used effectively.

The present invention has been made in view of the above, and it is therefore an object of the present invention to provide a user terminal and a radio communication method that allow efficient use of radio resources between DL control channels and DL data channels.

Solution to Problem

The present invention provides an apparatus in accordance with claim 1 and a system in accordance with claim 3.

Advantageous Effects of Invention

According to the present invention, it is possible to use radio resources effectively between DL control channels and DL data channels.

Brief Description of Drawings

FIGs. 1A and 1B are diagrams to show examples of allocation of DL data in DL control channel regions;
FIG. 2 is a diagram to show an example of allocation of DL data according to a first example of the present invention;
FIGs. 3A and 3B are diagrams to show other examples of allocation of DL data according to the first example;
FIGs. 4A and 4B are diagrams to show examples of DCI according to a second example of the present invention;
FIGs. 5A and 5B are diagrams to show examples of the relationship between the number of DL control channel candidates and the size of a given field, according to the second example;
FIGs. 6A and 6B are diagrams to show examples of allocation of DL data according to the second example;
FIGs. 7A and 7B are diagrams to show examples of allocation of DL data according to a first variation;
FIG. 8 is a diagram to show examples of DL control channel candidates according to the first variation;
FIGs. 9A and 9B are diagrams to show examples of accumulation of soft bits according to a second variation;
FIGs. 10A and 10B are diagrams to show examples of patterns of mapping DL data according to the second variation;
FIG. 11 is a diagram to show an example of allocation of DL data using first and second level DCIs according to a third example of the present invention;
FIG. 12 is a diagram to show an example of allocation of DL data according to a fourth example of the present invention;
FIG. 13 is a diagram to show an exemplary schematic structure of a radio communication system according to the present embodiment;
FIG. 14 is a diagram to show an exemplary overall structure of a radio base station according to the present embodiment;
FIG. 15 is a diagram to show an exemplary functional structure of a radio base station according to the present embodiment;
FIG. 16 is a diagram to show an exemplary overall structure of a user terminal according to the present embodiment;
FIG. 17 is a diagram to show an exemplary functional structure of a user terminal according to the present embodiment; and
FIG. 18 is a diagram to show an exemplary hardware structure of a radio base station and a user terminal according to the present embodiment.

Description of Embodiments

In existing LTE systems (for example, LTE Rel. 13 or earlier versions), in a predetermined number of symbols (up to three symbols) at the head of a TTI of 1 ms, a PDCCH is allocated over the entire frequency band (system band) of a certain carrier (CC, cell, etc.).
In this TTI of 1 ms, in symbols following the symbols where the PDCCH is placed, a PDSCH and/or a PUSCH are allocated in frequency resources (also referred to as, for example, "resource blocks (RBs)," "physical resource blocks_ (PRBs)," etc.) that are allocated by DCI transmitted via the PDCCH, in a resource block group (RBG) that is comprised of a predetermined number of RBs, and so on. As described above, in existing LTE systems, a time domain for a PDCCH and a time domain for a PDSCH are provided within a 1-ms TTI, and the PDCCH and the PDSCH are completely time-division-multiplexed (TDM (Time Division Multiplexing)).
Also, a DL control channel (for example, EPDCCH (Enhanced Physical Downlink Channel)) that is frequency-division-multiplexed with the PDSCH may also be allocated in a 1-ms TTI.
Meanwhile, envisaging future radio communication systems (for example, LTE Rel. 14 or 15, 5G, NR etc.), radio frame structures for realizing low latency (also referred to as "latency reduction," and/or others) and high-efficiency control are under study. For example, for future radio communication systems, research is underway to support TTIs (for example TTIs that are shorter than 1 ms) having different time durations (TTI durations) than the 1-ms TTIs of existing LTE systems.

In a TTI that is shorter than 1 ms (hereinafter referred to as a "short TTI"), it is likely that the number of resource elements where a DL data channel can be allocated is smaller than in a TTI of 1 ms (hereinafter referred to as a "normal TTI"), so that how to reduce the overhead is a critical issue.

Meanwhile, in existing LTE systems, a user terminal monitors a plurality of DL control channel candidates (also referred to as "search spaces" (user-specific search spaces (UE-specific search spaces) and/or common search spaces), "PDCCH candidates," "EPDCCH candidates" and so forth)). DCI for this user terminal is allocated to one of these DL control channel candidates, and detected by blind decoding.

For example, in existing LTE systems, a plurality of DL control channel candidates to be monitored by a user terminal may be selected based on following equation 1:

$$L\left\{(Y_K + m') \bmod \lfloor N_{CCE,k}/L \rfloor\right\} + i \quad \dots \text{(Equation 1)}$$

Here, $Y_k$ is a predetermined parameter (for a common search space, $Y_k=0$ is configured, and, for a UE-specific search space, $Y_k$ is a parameter that is based on a user terminal-specific ID (for example, a C-RNTI (Cell-Radio Network Temporary Identifier)). L is the aggregation level of control channel elements (CCEs). m' is a parameter that is based on at least one of the number $M^{(L)}$ of DL control channel candidates per aggregation level L, and the carrier ID field value nci. $N_{CCE,k}$ is the total number of CCEs in the DL control channel region in a subframe (TTI) k. i is the subscript for the aggregation level.

The user terminal blind-decodes these DL control channel candidates, and detects the DCI addressed to the user terminal. To be more specific, when the cyclic redundancy check (CRC) bits that are attached to DCI are scrambled (masked) based on an ID that is specific to the user terminal (for example, a C-RNTI, a UE-ID and/or the like) or based on an ID that is common in the system (for example, a P-RNTI (Paging RNTI), an RA-RNTI (Random Access RNTI), an SI-RNTI (System Information RNTI) and/or the like), the user terminal judges that the DCI is addressed to the user terminal.

In existing LTE systems (for example, Rel. 13 and earlier versions), a prospective DL control channel where DCI for a given user terminal is not mapped is used for DCI for other user terminals, or not used. In future radio communication systems, allocating a DL data channel to this unused prospective DL control channel might be effective in reducing the overhead of TTIs.

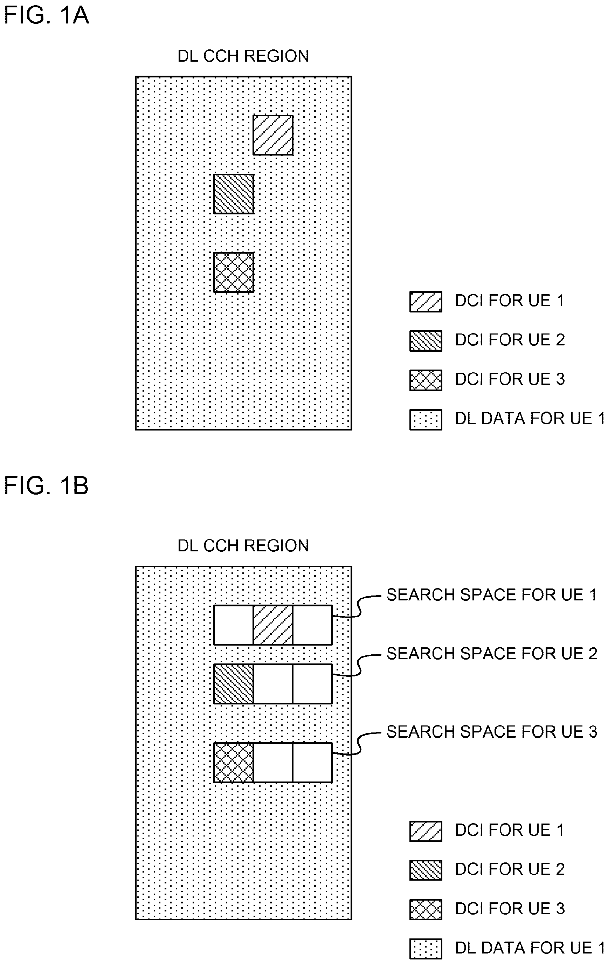

FIGs. 1 provide diagrams to show examples of allocation of DL data in DL control channel regions. The DL control channel (DL CCH) regions shown in FIGs. 1A and 1B are resource regions for DL control channels (for example, resource regions for PDCCH and/or EPDCCH).

In the DL control channel region of FIG. 1A, DCIs addressed to user terminals (UE (User Equipment)) 1 to 3 are allocated. In this DL control channel region, in resources where the DCIs for user terminals 1 to 3 are not allocated, DL data for user terminal 1 is allocated. In this case, unused resources in the DL control channel region can be eliminated, so that the spectral efficiency can be improved.

Nevertheless, each user terminal is unable to detect the other user terminal's DCIs. Furthermore, each user terminal may fail to detect DCI that is addressed to the user terminal itself. For example, user terminal 1 of FIG. 1A, being unable to detect DCIs addressed to user terminals 2 and 3, decodes DL data on assumption that DL data for user terminal 1 may be allocated to resources where these DCIs are mapped. As a result of this, user terminal 1 may fail to decode DL data properly.

So, when, as shown in FIG. 1B, there is a DL control channel region, it may be possible to configure a search space, comprised of a plurality of DL control channel candidates, per user terminal, and not to map DL data to assignment resources in each search space. For example, in FIG. 1B, user terminal 1 assumes that DL data for user terminal 1 is not mapped to a plurality of DL control channel candidates that constitute the respective search spaces of user terminals 1 to 3, so that user terminal 1 can lower the error rate upon decoding this DL data.

Meanwhile, when, as shown in FIG. 1B, a search space comprised of a plurality of DL control channel candidates is provided for each user terminal in a DL control channel region, allocating DL data to resources apart from these DL control channel candidates only increases the number of DL control channel candidates that are not used, and, as a result of this, it may not be possible to reduce the overhead of TTIs in an effective manner.

So, the present inventors have come up with the idea of by reducing unused DL control channel candidates, so as to allow efficient use of radio resources can between DL control channels and DL data channels and reduce the overhead of TTIs effectively, and arrived at the present invention.

Now, embodiments of the present invention will be described below in detail. The DL control channel region according to the present embodiment refers to a resource region for DL control channels (for example, PDCCH and/or EPDCCH). The DL control channel region has a predetermined bandwidth (for example, part or all of the system band) and a predetermined time duration (for example, a predetermined number of symbols), and is constituted by predetermined resource units (for example, CCEs and/or ECCEs (Enhanced CCEs)).

In the following description, the DL control channel (DL CCH) field will be constituted by consecutive resource units in the frequency direction and the time direction, but this is by no means limiting. The DL control channel region may be constituted by discrete resource units in the frequency direction and/or the time direction. Furthermore, the DL control channel region may be provided in any of normal TTIs or short TTIs.

Also, search spaces according to the present embodiment are constituted by a plurality of candidate resources (DL control channel candidates) in a DL control channel. These search spaces may be referred to as a "search space set," a "search space subset," a "prospective resource set," a "prospective DL control channel set," and the like.

(First Example)

According to a first example of the present invention, a search space that is defined is shared by one or more grouped user terminals. This search space is constituted by a plurality of DL control channel candidates shared by one or more user terminals. Each prospective DL control channel is constituted by one or more resource units (for example, CCEs and/or ECCEs).

In the first example, a user terminal monitors a plurality of DL control channel candidates (candidate resources) constituting a search space like the above, and receives DCI that is mapped to at least one of these DL control channel candidates. Also, the user terminal controls the receipt of a DL data channel based on this DCI. Furthermore, the user terminal selects these DL control channel candidates based on a parameter (higher layer parameter) sent via higher layer signaling.

The higher layer parameter in this case may be a value that applies in common to one or more user terminals that share these DL control channel candidates (that is, information that applies to one or more grouped user terminals in common (group-common information)). This higher layer parameter is configured (reported) from a radio base station (for example, an eNB (eNodeB), a gNB (gNodeB) and/or the like) to the user terminals.

For example, in the event a plurality of DL control channel candidates constituting the above search space are defined based on above equation 1, predetermined parameter $Y_k$ in above equation 1 may be based on the above-mentioned higher layer parameter, instead of the parameter based on a UE-specific ID (for example, C-RNTI or UE-ID). By making this higher layer parameter a common value among user terminals placed in a group, one or more grouped user terminals can share the same search space.

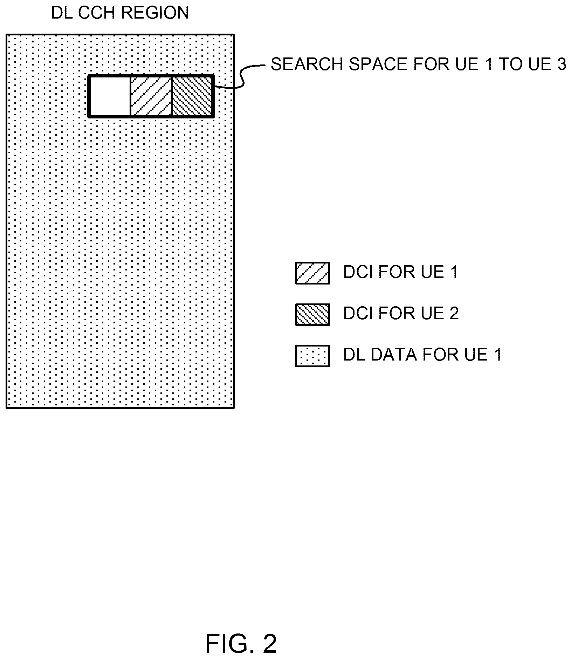

FIG. 2 is a diagram to show an example of allocation of DL data according to the first example. For example, FIG. 2 shows a search space that is shared by user terminals 1 to 3. As described above, a plurality of DL control channel candidates constituting this search space (here, three DL control channel candidates) may be selected based on a higher layer parameter that is common to user terminals 1 to 3.

In the search space of FIG. 2, DCIs addressed to user terminals 1 and 2 are allocated to two DL control channel candidates, and the remaining prospective DL control channel is not used. Note that the number of DL control channel candidates to constitute a search space is not limited to three.

When a search space is allocated as shown in FIG. 2, DL data for user terminals in this group (user terminal 1 in FIG. 2) may be allocated to resources apart from the search space in the DL control channel (DL CCH) field. When the resources assigned for DL data ("assignment resource"), designated by DCI, include the search space, the user terminal 1 of FIG. 2 may decode DL data on assumption that the DL data is allocated to resources, among the assignment resources, apart from the search space (that is, the DL data is not allocated to the search space).

In FIG. 2, user terminals 1 3 each blind-decode the search space that is configured, based on the higher layer parameter, which has been mentioned earlier. Each user terminal of FIG. 2 does not have to identify other user terminals that use the search space.

In FIG. 2, user terminal 1 detects DCI, in which the CRC part is masked (scrambled) based on a specific parameter (for example, a UE-specific ID, an ID that is common in the system or the above higher layer parameter), and receives DL data based on this DCI. To be more specific, user terminal 1 may assume that the DL data is allocated to resources apart from the search space (that is, the DL data is not allocated to the search space), among the assignment resources for the DL data, designated by the DCI.

As shown in FIG. 2, when a search space to be shared by user terminals 1 to 3 is provided, DL control channel candidates that are not used can be reduced compared to when UE-specific search spaces are provided for each of user terminals 1 to 3 (see FIG. 1B).

In the first example, a single search space may be provided in the DL control channel region (FIG. 2), or a plurality of search spaces may be provided. The user terminal may select these multiple search spaces based on the higher layer parameter, and control the receipt of DL data based on these search spaces.

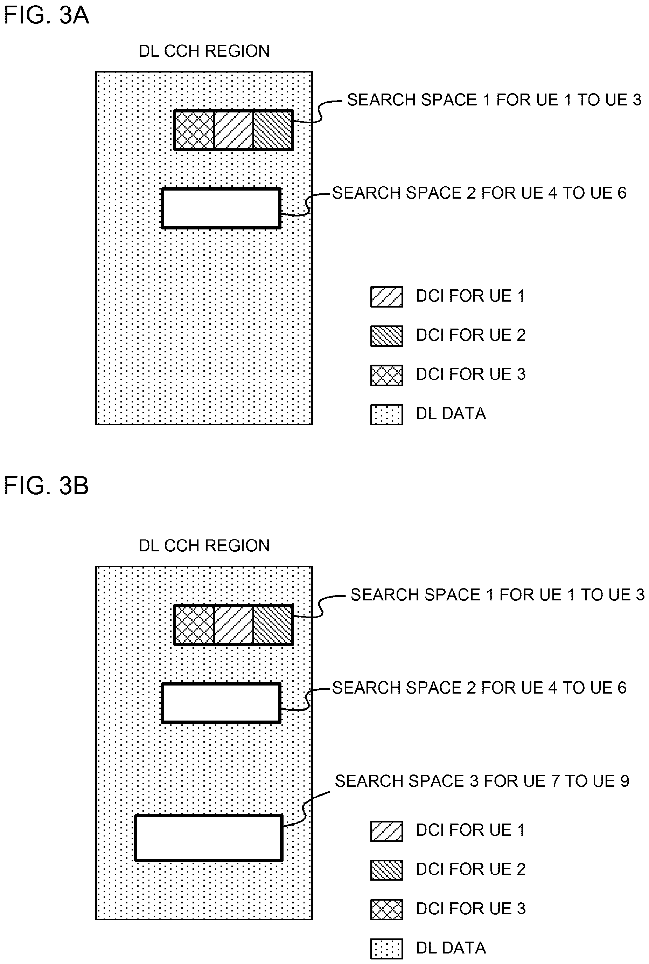

FIG. 3 is a diagram to show other examples of allocation of DL data according to the first example. FIG. 3A shows a search space 1, which is shared by user terminals 1 to 3, and a search space 2, which is shared by user terminals 4 to 6.

In FIG. 3A, in addition to the higher layer parameter for use for selecting search space 1 for user terminals 1 to 3, a higher layer parameter for use for selecting search space 2 for the rest of user terminals 4 to 6 is also reported to user terminals 1 to 3.

Also, in FIG. 3A, user terminal 1 learns that DL data is allocated in the DL control channel region, from the DCI detected in search space 1. In this case, the user terminal 1 selects search spaces 1 and 2 based on a higher layer parameter, and decodes the DL data on assumption that, among the assignment resources for the DL data, designated by the DCI, the DL data is allocated to resources apart from search spaces 1 and 2 (where search space 2 is a blanked resource).

FIG. 3B shows an example in which a search space 1 that is shared by user terminals 1 to 3, a search space 2 that is shared by user terminals 4 to 6, and a search space 3 that is shared by user terminals 7 to 9. As has been described with reference to FIG. 3A, user terminal 1 selects search spaces 1 to 3 based on a higher layer parameter, and decodes the DL data on assumption that, among the assignment resources for the DL data, designated by the DCI, the DL data is allocated to resources apart from search spaces 1 to 3 (where search space 2 is a blanked resource).

As shown in FIGs. 3A and 3B, by providing a plurality of search spaces, it is possible to schedule more user terminals in the same TTI. Also, search spaces for other user terminals are reported as blank resources, so that, when DL data for one user terminal is allocated in the DL control channel region, it is possible to prevent DCI for another user terminal from being mistaken for and decoded as DL data for the former user terminal.

As described above, according to the first example, DL data can be allocated to resources apart from search space in the DL control channel region, so that, compared to the case where a UE-specific search spaces are provided for every user terminal, DL data assignment resources can be increased.

(Second Example)

In existing LTE systems (for example, Rel. 13 or earlier versions), a user terminal does not know which UE-specific IDs (for example, C-RNTIs or UE-IDs) are used to scramble (mask) the CRCs to be attached to DCIs for other user terminals, and is therefore unable to detect these other user terminals' DCIs. Consequently, when it is permitted to allocate (map) DL data for user terminals to unused DL control channel candidates, a user terminal might receive another user terminal's DCI, allocated to these unused DL control channel candidates, as the DL data addressed to the user terminal itself, and, as a result of this, the error rate of DL data might increase.

The second example allows a user terminal to detect not only the DCI for the user terminal itself, but also DCIs for other user terminals, so that, even when DL data for the user terminal is allocated to unused DL control channel candidates, it is possible to prevent the error rate of the DL data from increasing.

To be more specific, according to the second example, CRC bits that are attached to a DCI are scrambled (masked) based on a parameter that is different from a UE-specific ID (for example, a C-RNTI, UE-ID, etc.). For example, this parameter can be a value that applies to one or more grouped user terminals in common (hereinafter referred to as "group-common information"). In addition, this parameter may be the same as or different from the higher layer parameter for use for selecting search spaces, which has been described with the first example. This parameter is reported from the radio base station to the user terminal by way of higher layer signaling and/or physical layer signaling.

Also, according to the second example, a DCI may contain a given field value that indicates which user terminal the DCI is addressed to. For example, when the user terminal detects a DCI to which CRC bits scrambled based on the above group-common information are attached, the user terminal may determine whether or not this detected DCI is addressed to the user terminal based on the given field value in the DCI.

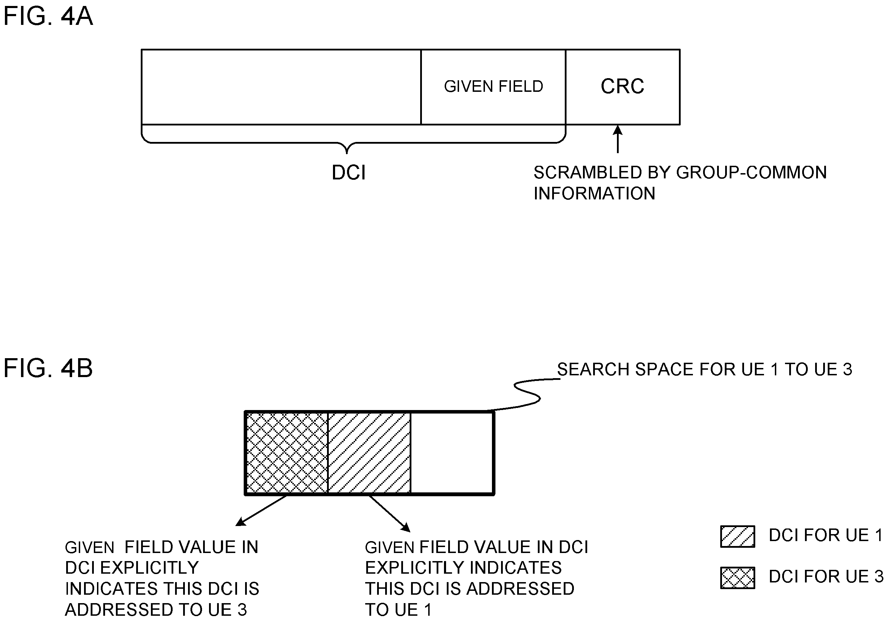

FIGs. 4 provide diagrams to show an example of DCIs according to the second example. As shown in FIG. 4A, a DCI for use in the second example may be attached with CRC bits that are scrambled based on group-common information. Also, this DCI contains given field for use for identifying the user terminals with which the search space is shared.

FIG. 4B shows an example of a search space in which the DCI shown in FIG. 4A is mapped. FIG. 4B shows a search space that is shared by user terminals 1 to 3, and this search space contains three DL control channel candidates. Note that the number of user terminals that share the search space, the number of DL control channel candidates constituting the search space and so forth are by no means limited to these shown in FIG. 4B.

In FIG. 4B, user terminal 1 blind-decodes a plurality of DL control channel candidates in the search space, and, based on a CRC check using group-common information, detects DCIs (two DCIs in FIG. 4A) to which CRC bits scrambled based on group-common information are attached. User terminal 1 determines whether or not the detected DCIs are addressed to user terminal 1, based on a given field value in the DCIs. Based on the DCI in which a given field value designates user terminal 1, user terminal 1 controls receipt of a DL data channels and/or transmission of a UL data channel.

Also, in FIG. 4B, user terminal 1 can learn that no DCI to address any of user terminals 1 to 3, which share the search space, is mapped to the prospective DL control channel where the CRC check using group-common information fails. If the assignment resources for DL data for user terminal 1 include these multiple DL control channel candidates, user terminal 1 may assume that DL data for user terminal 1 is also allocated to the above-noted prospective DL control channel where the CRC check fails.

<Size of Given field>

In the second example, the size of the given field for use for identifying DCI will be described. The size of this given field (the number of bits) may be a value that is determined regardless of the number of DL control channel candidates in the search space, or may be a value that is determined based on the number of DL control channel candidates (for example, a value equal to the size of a UE-specific ID).

For example, if the size of the above given field in DCI is not based on the number of DL control channel candidates, a value that is equal to the size of a UE-specific ID may be used (for example, 16 bits, which is the same as a C-RNTI).

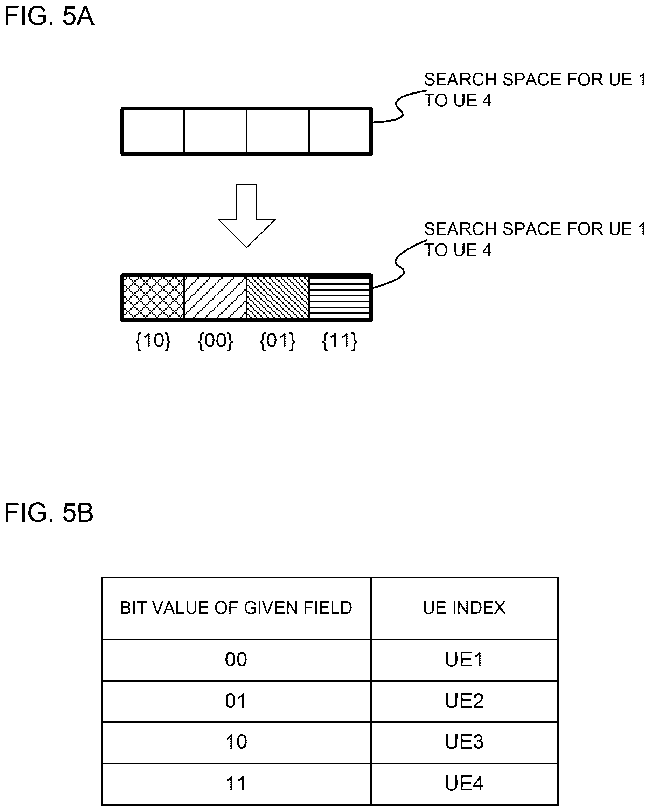

Also, when the size of the given field in DCI is based on the above number (N) of DL control channel candidates, the size of this given field in DCI may be $\log_2 (N)$ bits. FIGs. 5 provide diagrams to show examples of the relationship between the number of DL control channel candidates and the size of the given field, according to the second example. FIG. 5A shows a search space that is shared by user terminals 1 to 4, where N=4. In this case, the size of the given field may be two bits.

As shown in FIG. 5B, the bit values of the two-bit given field are associated with the user terminals that share the search space (or the index numbers of these user terminals (hereinafter referred to as "UE indices")). Which user terminals (or UE indices) are associated with which bit values may be configured via higher layer signaling.

As shown in FIG. 5A, the DCI mapped to each prospective DL control channel in the search space contains a given field value that is associated with a user terminal (UE index) that shares this search space. User terminals 1 to 4 that blind-decode multiple DL control channel candidates in the search space each detect four DCIs based on a CRC check using group-common information, and, based on the respective given field values in these four DCIs, identify which DCI is addressed to which of user terminals 1 to 4.

Note that, in existing LTE systems, the numbers of prospective DL channels at CCE aggregation levels 1, 2, 4 and 8 are 6, 6, 2 and 2, respectively, which makes the total number of DL control channel candidates in the search space 16. When the search space according to the second example is constituted by sixteen DL control channel candidates as in existing LTE systems, the above-described given field in DCI may be constituted by four bits (= $\log_2 (16)$).

<Mapping of DL data>

Mapping of DL data according to the second example will be described in detail. According to the second example, DL data may be mapped to DL control channel candidates in the search space where no DCI is mapped.

To be more specific, when the assignment resources for DL data, indicated by DCI addressed to the user terminal, includes the multiple DL control channel candidates described above, the user terminal may assume that DL data is allocated to the candidate resources where no DCI is detected.

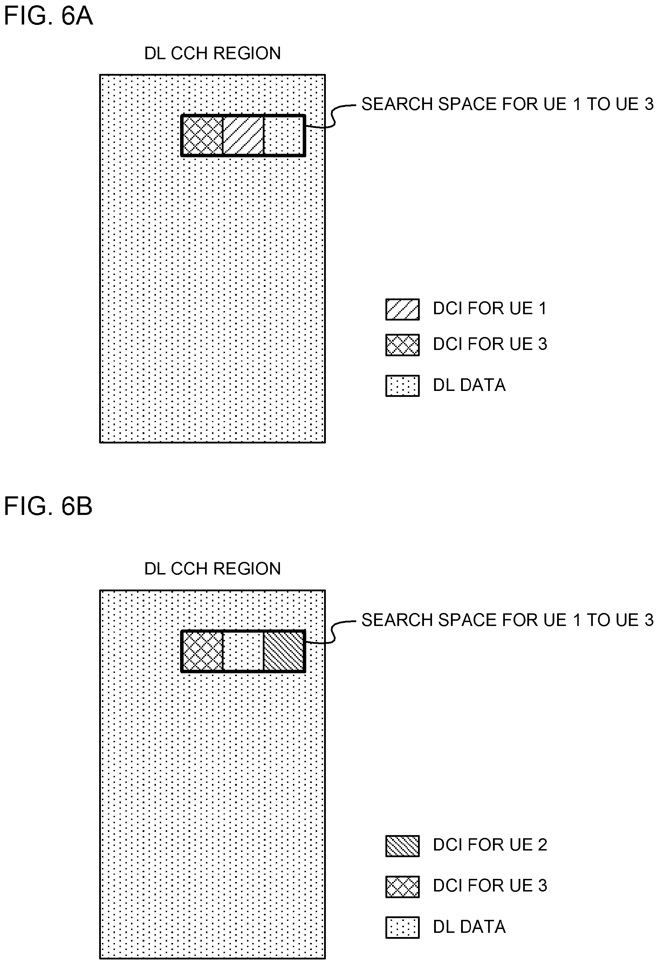

FIG. 6 is a diagram to show examples of allocation of DL data according to the second example. FIGs. 6 A and 6 B each show a search space shared by user terminals 1 to 3. In FIGs. 6A and 6B, the search space is comprised of three DL control channel candidates. Note that the number of user terminals to share the search space, the number of DL control channel candidates to constitute the search space and so on are not limited to those shown in FIGs. 6A and 6B.

In FIG. 6A, DCIs for user terminals 1 and 3 are mapped to two DL control channel candidates, but the remaining one prospective DL control channel is not used. In this case, DL data (for example, DL data for user terminal 1 or 3, for which DCI is mapped in the same search space) may be mapped to this unused prospective DL control channel.

Similarly, in FIG. 6B, DCIs for user terminals 2 and 3 are mapped to two DL control channel candidates, but the remaining one prospective DL control channel is not used. In this case, DL data (for example, DL data for user terminal 2 or 3, for which DCI is mapped in the same search space) may be mapped to this unused prospective DL control channel.

In FIGs.6A and 6B, since each user terminal that shares the search space can detect not only the DCI for the user terminal itself but also DCIs for other user terminals, and therefore can identify unused DL control channel candidates accurately. As a result of this, it is possible to map DL data for user terminals to unused DL control channel candidates, while preventing the error rate of DL data from increasing, so that overhead can be reduced.

<First Variation>

The second example described above assumes that a DL control channel is used in a single configuration. Meanwhile, the received quality of a DL control channel (for example, SINR (Signal-to-Interference plus Noise power Ratio)) is not necessarily the same between multiple user terminals. For example, the received quality of a user terminal located at the edge of a cell is likely to be poorer than the received quality of a user terminal located at the center of the cell. Therefore, when a single configuration is used, a user terminal whose status of communication does not fulfill predetermined conditions fails to detect DCIs for other user terminals, and, as a result of this, the system performance may be deteriorated.

Therefore, with the first variation, a plurality of configurations of DL control channels, with different received-quality requirements, may be used, and DL control channel candidates of these multiple configurations may be provided in the search space. In this case, the efficiency of communication might decline compared to the case where DL control channels of a single configuration are used. Meanwhile, multiple user terminals showing different levels of received quality can share the same search space, so that it is possible to improve the robustness of communication, and to find a balance between efficiency and robustness.

Here, the configuration of a DL control channel can be determined by at least one of (1) the number of resource units (for example, CCEs, ECCEs and so forth) that are aggregated to constitute the DL control channel (aggregation level), (2) the modulation scheme and/or the coding rate applied to the DL control channel (for example, MCS (Modulation and Coding Scheme)), (3) the number of layers in space multiplexing (MIMO (Multiple-Input and Multiple-Output)) applied to the DL control channel, and (4) the mapping (transmission) scheme for the DL control channel (for example, distributed or localized scheme).

In addition, to say that a number of configuration have different received-quality requirements, this means that at least one of (1) the above aggregation level, (2) the modulation scheme and/or the coding rate, (3) the number of layers in space multiplexing, and (4) the mapping scheme is different between these configurations. For example, when (1) the aggregation level is lower, higher received equality is required. Also, when (2) a higher-order modulation scheme and/or a higher coding rate (higher MCS index value) are used, higher received quality is required. Also, when (3) the number of layers in space multiplexing is greater, higher received quality is required.

Hereinafter, the first variation will be described, primarily focusing on differences from the first and/or second examples. According to the first variation, to detect a DL control channel of a specific configuration, a user terminal may assume that DL control channels (DCI for other user terminals) are mapped, but no DL data is mapped, to DL control channel candidates of configurations that require higher received quality than this specific configuration.

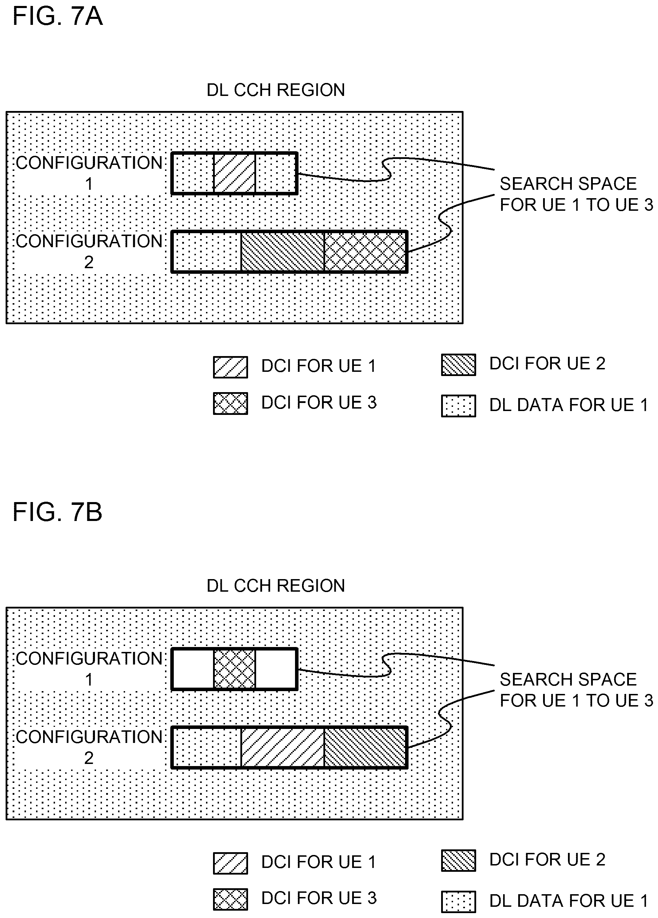

FIGs. 7 are diagrams to show examples of allocation of DL data according to the first variation. FIGs. 7A and 7B show examples of using DL control channels of two configurations 1 and 2 with different aggregation levels, but, as mentioned earlier, the configurations of DL control channels are not limited to these.

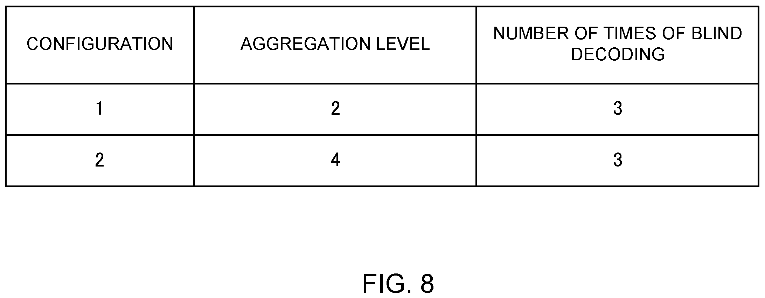

FIGs. 7A and 7B show search spaces shared by user terminals 1 to 3. These search spaces are comprised of a plurality of DL control channel candidates of different configurations (here, a total of six DL control channel candidates of configurations 1 and 2). These DL control channel candidates may be defined as shown in FIG. 8, for example.

FIG. 8 is a diagram to show examples of DL control channel candidates according to the first example. Note that FIG. 8 illustrates a case where the configurations of DL control channels are identified based on the aggregation level of above (1), but these configurations have only to be identified based on at least one of (1) to (4) above. For example, in FIG. 8, the aggregation level of configuration 1 is 2, and the aggregation level of configuration 2 is 4. Note that the aggregation levels shown in FIG. 8 are by no means limiting, and have only to be 1 or greater (for example, at least one of 1, 2, 4 and 8).

Also, in FIG. 8, the number of times of blind decoding is specified for each configuration (here, the aggregation level) (that is, the number of DL control channel candidates). For example, in FIG. 8, in both configurations 1 and 2, the number of times of blind decoding is configured to three. Note that the number of times of blind decoding (DL control channel candidates) in each configuration is not limited to three, and has only to be one or greater.

Referring to FIG. 7A, user terminal 1 blind-decodes the three DL control channel candidates of configuration 1 and the three DL control channel candidates of configuration 2 in the search spaces. User terminal 1 detects DCI for user terminal 1 in a prospective DL control channel of configuration 1, where the highest received quality is required. In addition, user terminal 1 detects DCIs for user terminals 2 and 3, in DL control channel candidates of configuration 2, which can be detected in lower received quality than configuration 1.

In this way, in FIG. 7A, DCI for user terminal 1 is detected in a DL control channel of configuration 1, which requires the highest received quality. Therefore, as shown in FIG. 7A, when the assignment resources for DL data, designated by the DCI for user terminal 1, include the above search spaces, user terminal 1 may assume that DL data for user terminal 1 is mapped to at least one prospective DL control channel, among a number of DL control channel candidates of configurations 1 and 2, where no DCI for user terminal 1 to 3 is detected (in FIG. 7A, two DL control channel candidates of configuration 1 and one prospective DL control channel of configuration 2).

On the other hand, in FIG. 7B, as shown in FIG. 7A, user terminal 1 that performs blind decoding detects DCI for user terminal 1 and DCI for user terminal 2 in configuration 2, which allows lower received quality than configuration 1. In FIG. 7B, user terminal 1 is unable to detect the DCI for user terminal 3 that is mapped to a prospective DL control channel of configuration 1,which requires higher received quality than configuration 2.

Therefore, as shown in FIG. 7B, when the assignment resources for DL data, designated by the DCI for user terminal 1, include the above search spaces, user terminal 1 assumes that DL data for user terminal 1 is not mapped to any of the DL control channel candidates of configuration 1, and that DL data for user terminal 1 is mapped to at least one prospective DL control channel, among the DL control channel candidates of configuration 2, where no DCI for user terminal 1 to 3 is detected (in FIG. 7A, one prospective DL control channel).

According to the first variation, DL control channel candidates of multiple configurations, with different received-quality requirements, are provided in a search space, so that, it is possible to improve the robustness of communication even when a plurality of user terminals to show different levels of received quality share the same search space.

Also, according to the first variation, when the assignment resources for DL data that are designated by DCI for a user terminal include search spaces, it is likely that DL data for the user terminal is not mapped to configurations in which higher received quality is required than in the configuration in which the DCI is detected. Consequently, for example, referring to FIG. 7B, it is possible to prevent the error rate upon decoding of DL data for user terminal 1 from increasing due to the inability to detect the DCI for user terminal 3 that is mapped to a prospective DL control channel of a configuration for high received quality.

<Second Variation>

With a second variation, the accumulation of bits, obtained in the decoding process of DL data (also referred to as "soft bits," "soft channel bits," etc.), will be described below. The second variation can be combined with at least one of the first example, the second example and the first variation.

When, in existing LTE systems, a user terminal fails the decoding process of DL data, the user terminal stores the soft bits obtained in this decoding process in a predetermined buffer(also referred to as a "soft buffer," "IR (Incremental Redundancy)," etc.). The user terminal can reduce the time it takes to restore DL data by combining the soft bits obtained in the decoding process of DL data that is retransmitted based on retransmission control (HARQ (Hybrid Automatic Repeat reQuest)) and the soft bits stored in the soft buffer (also referred to as "soft combining," "HARQ combining," etc.).

Meanwhile, as has been described with the second example, if DL data might also be mapped to DL control channel candidates where no DCI is detected, the wrong soft bits are stored in the soft buffer, and, as a result of this, the efficiency of restoring DL data might decline.

To be more specific, according to the second example, when search spaces are included in the assignment resources for DL data, designated by DCI for a user terminal, this user terminal assumes that DL data is mapped to DL control channel candidates where no DCI for other user terminals is detected. Consequently, when the user terminal fails to detect DCI for another user terminal, the user terminal performs the decoding process using this DCI for the other user terminal as DL data, and accumulates the wrong soft bits that are obtained, in the soft buffer. As a result, the efficiency of restoring DL data might decline.

Therefore, with the second variation, when the user terminal fails the decoding process of DL data, the user terminal does not have to accumulate the soft bits that correspond to resources where search spaces are mapped.

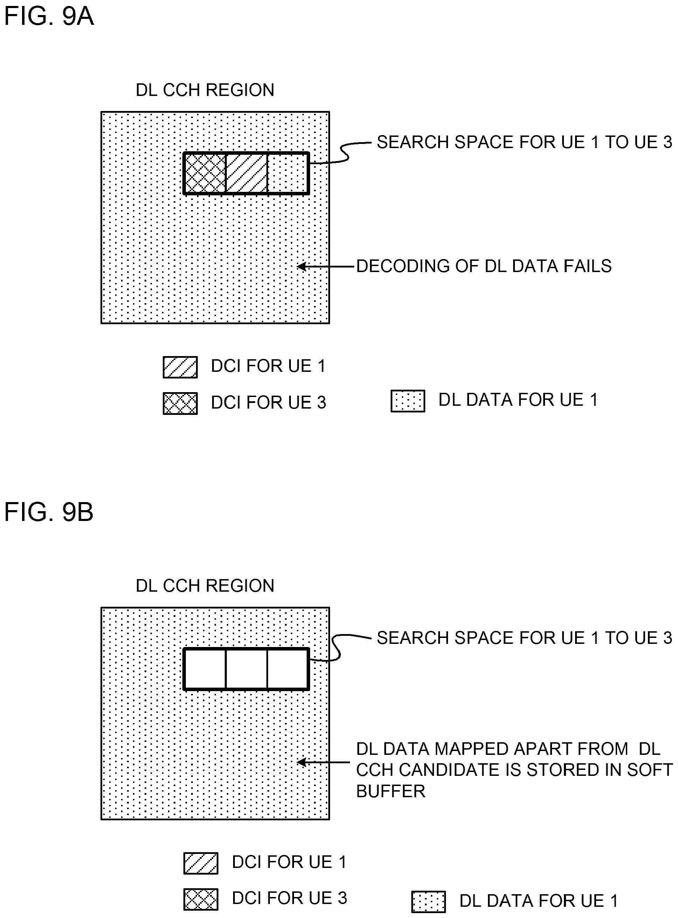

FIGs. 9 are diagrams to show examples of accumulation of soft bits according to the second variation. FIGs. 9A and 9B show search spaces that are shared by user terminals 1 to 3. FIG. 9A assumes that the assignment resources for DL data that are designated by the DCI for user terminal 1 includes resources for allocating a search space.

Referring to FIG. 9A, user terminal 1 performs the decoding process of DL data on assumption that DL data for this user terminal 1 is mapped to the prospective DL control channel in the search space where no DCI is detected, but fails.

As shown in FIG. 9A, when DL data is also mapped to unused DL control channel candidates, as shown in FIG. 9B, user terminal 1 accumulates the soft bits that correspond to the assignment resources, not including the search space, among the soft bits obtained by the DL data decoding process, in the soft buffer. User terminal 1 does not accumulate the soft bits corresponding to the resources where the search space is mapped.

By this means, even when user terminal 1 is unable to detect DCIs for other user terminals (for example, user terminal 2 in FIG. 9A), user terminal 1 can avoid mistaking another user terminal's DCI for DL data for user terminal 1 and accumulating this DCI in a soft buffer. Consequently, the efficiency of restoring DL data can be improved.

As described above, when a user terminal does accumulate, in a soft buffer, the soft bits of DL data that corresponds to resources where search spaces are allocated, this DL data may be mapped to assignment resources, apart from the resources where search spaces are allocated, and then mapped to the resources where search spaces are allocated.

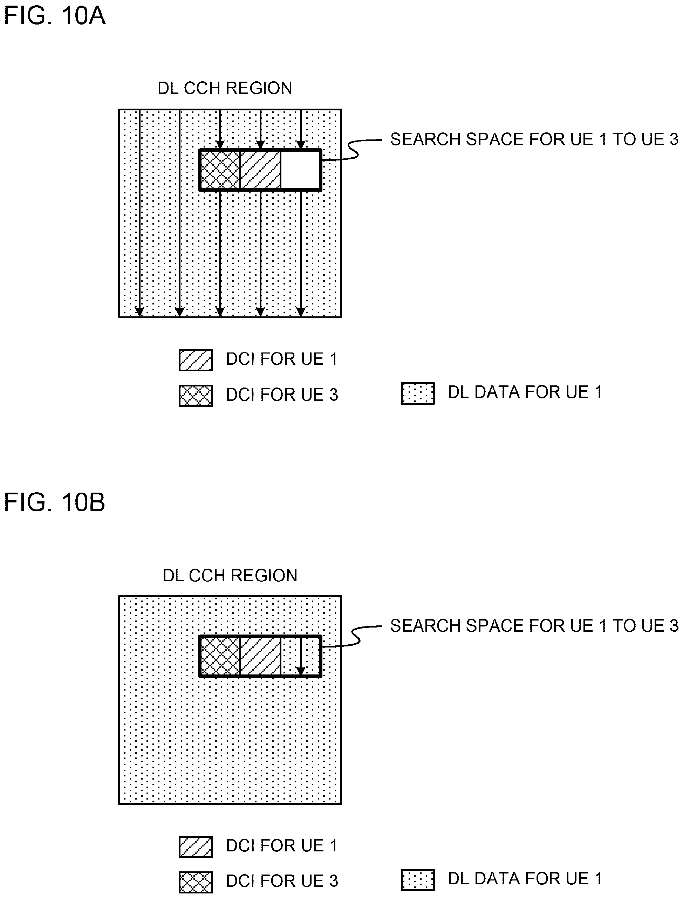

FIGs. 10 provide diagrams to show examples of patterns of mapping DL data according to the second variation. FIGs. 10A and 10B assume that the assignment resources for DL data, which are designated by DCI for user terminal 1, include resources in which search spaces are allocated.

Referring to FIG. 10A, DL data for user terminal 1 is first mapped to assignment resources apart from the resources where the search space is allocated. To be more specific, as shown in FIG. 10A, DL data for user terminal 1 may be mapped to these assignment resources, first in the frequency direction (frequency-first), and, secondly, in the time direction (time-second). For example, the DL data may be mapped per time resource unit (for example, symbol) in the assignment resources, in order, from the frequency resource unit (for example, the subcarrier) of the lowest frequency (or the highest frequency).

Alternatively, although not illustrated in the drawings, the DL data for user terminal 1 may be mapped to the assignment resources, except for the resources where the search space is allocated, first in the time direction (time-first), and, secondly, in the frequency direction (frequency-second). For example, the DL data may be mapped per frequency resource unit (for example, subcarrier or PRB) in the assignment resources, in order, from the first time resource unit (for example, the first symbol).

Next, as shown in FIG. 10B, the DL data is mapped to unused DL control channel candidates in the search space. For example, in the example of FIG. 10B, one prospective DL control channel in the search space is not used for DCI for any of user terminals 1 to 3, so that the DL data for user terminal 1 is mapped to the resource allocated to this one prospective DL control channel.

In this way, DL data is mapped to unused DL control channel candidates at the end, so that the user terminal can delete a predetermined number of bits at the end of the soft bits that are obtained by the decoding process of the DL data, and store the rest of the soft bits in a soft buffer. Consequently, when the user terminal accumulates only the soft bits that correspond to assignment resources apart from the resources allocated to the search space in the soft buffer, the user terminal can easily select the soft bits to accumulate.

According to the second variation, even when a user terminal fails the decoding process of DL data, DL data that is mapped to DL control channel candidates is not stored in the soft buffer. Therefore, it is possible to prevent DCI that has failed to be detected from being wrongly stored in the soft buffer as DL data, and prevent the efficiency of restoring DL data from declining. As a result of this, it is also possible to prevent soft buffer size from increasing.

(Third Example)

According to the second example described above, it is possible to detect unused DL control channel candidates in a search space by making it possible to detect DCIs addressed to other user terminals that share the search space. With the third example of the present invention, DCIs of different levels (also referred to as "stages," "types," and so forth) (for examples, first and second levels) are provided to make it possible to detect DL control channel candidates that are not used, without even detecting DCIs for other user terminals.

As used in the third example DCI of the first level indicates whether or not DCI of a second level is present in the search space and/or in which prospective DL control channel in the search space the second-level DCI is allocated (or which prospective DL control channel is unused).

For example, first-level DCI may indicate the index of a prospective DL control channel where second-level DCI is allocated (or not allocated), or the index (for example, CCE index or ECCE index) of the resource unit constituting this prospective DL control channel.

First-level DCI may be common to all user terminals in the cell, or may be common to one or more user terminals that are grouped (for example, one or more user terminals sharing the search space). CRC bits to be attached to this first level-DCI may be scrambled based on information common in the cell, or may be scrambled based on group-common information.

Meanwhile, second-level DCI may be UE-specific. CRC bits to be attached to this second level-DCI may be scrambled based on UE-specific IDs (for example C-RNTIs or UE-IDs). In this case, DCI formats for existing LTE systems (for example, Rel. 13 or earlier versions) may be applied to the second level-DCI.

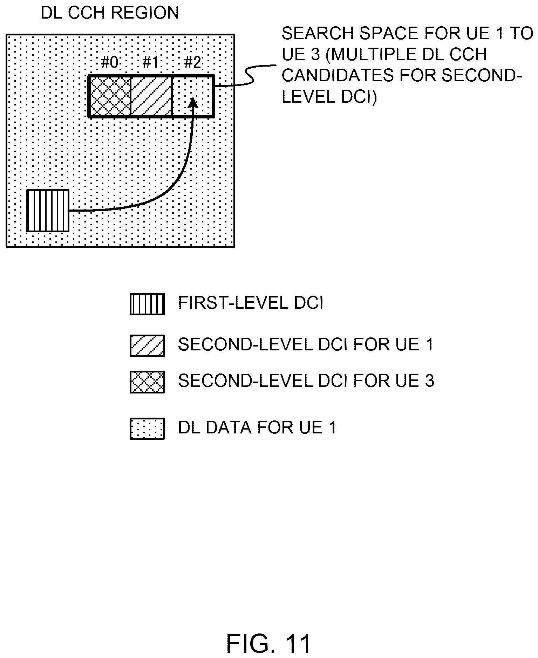

FIG. 11 is a diagram to show an example of the allocation of DL data using DCI of the first and second levels according to the third example. FIG. 11 shows a search space that is shared by user terminals 1 to 3. Also, assume that this search space is constituted by DL control channel candidates #0, #1 and #2.

For example, in FIG. 11, first-level DCI, which applies in common to user terminals 1to 3, indicates that no second-level DCI is allocated to prospective DL control channel #2. User terminal 1 blind-decodes DL control channel candidates #0, #1, and #2, and, based on a CRC check using an ID (for example, C-RNTI or UE-ID) that is specific to user terminal 1, detects DCI for user terminal 1 in prospective DL control channel #1.

In FIG. 11, if the assignment resources for DL data designated by this DCI include the above search space, user terminal 1 may assume that DL data for user terminal 1 is allocated to prospective DL control channel #2, which is designated by the first-level DCI. Note that user terminal 1 is unable to detect the second-level DCI for user terminal 3 that is mapped to prospective DL control channel #0.

According to the third example, the first-level DCI specifies DL control channel candidates where no second-level DCI is allocated, so that unused DL control channel candidates can be detected without even detecting DCIs addressed to other user terminals in the search space. Furthermore, according to the third example, DCI, with CRC bits that are scrambled by using UE-specific IDs attached thereto, can be used as second-level DCI. As a result of this, the load of design when mapping of DL data to unused DL control channel candidates is permitted can be reduced.

Note that if user terminal fails to detect first-level DCI, the user terminal may assume that no second-level DCI to address the user terminal itself is detected. In this case, the user terminal's power consumption related to blind-decoding of DCI can be reduced. Alternatively, when the user terminal fails to detect first-level DCI, the user terminal blind-decodes second-level DCI that addresses the user terminal itself, but the user terminal may receive and decode all the DL control channel candidates included in the search space for the user terminal on assumption that DL data is not mapped. In this way, it is possible to increase the possibility of receiving DL data scheduled by second-level DCI even when the decoding of first-level DCI fails.

(Fourth Example)

With a fourth example of the present invention, a user terminal may judge, based on in which prospective DL control channel DCI to designate the assignment resources for DL data for the user terminal is detected, whether or not this DL data is mapped to the DL control channel candidates in the assignment resource.

To be more specific, when DCI that is detected in a prospective DL control channel in the search space allocates (schedules) resource, at least part of which does not overlap with the assignment resource of the prospective DL control channel, to DL data, the user terminal may assume that this DL data is allocated to the DL control channel candidates in the assignment resources designated by the DCI.

On the other hand, when the above case does not apply -- that is, when DCI that is detected in a prospective DL control channel in the search space allocates resource, which at least partially of overlaps with the assignment resource of the prospective DL control channel, to DL data -- the user terminal may determine whether or not this DL data is allocated to the prospective DL control channel in the assignment resource, designated by this DCI, based on a predetermined conditions.

For this predetermined condition, for example, the index of the prospective DL control channel where the DCI is detected may be used. To be more specific, the user terminal may assume that DCIs for other user terminals are mapped (in other words, DL data for the user terminal is not mapped) to DL control channel candidates having index numbers that are smaller than the index of the prospective DL control channel where the DCI is detected. Also, the user terminal may assume that DL data for the user terminal is mapped to DL control channel candidates having larger index numbers than the index of the prospective DL control channel where the DCI is detected.

Note that, as to the order of assigning indices to DCI, for example, it is possible to assign indices in ascending order of aggregation levels (ALs), and, when there are DL control channel candidates at each AL, in ascending order of control channel element (CCE) indices, or indices may be assigned based on different rules. The fourth example can be realized by assigning indices based on the same rule between user terminals and radio base stations.

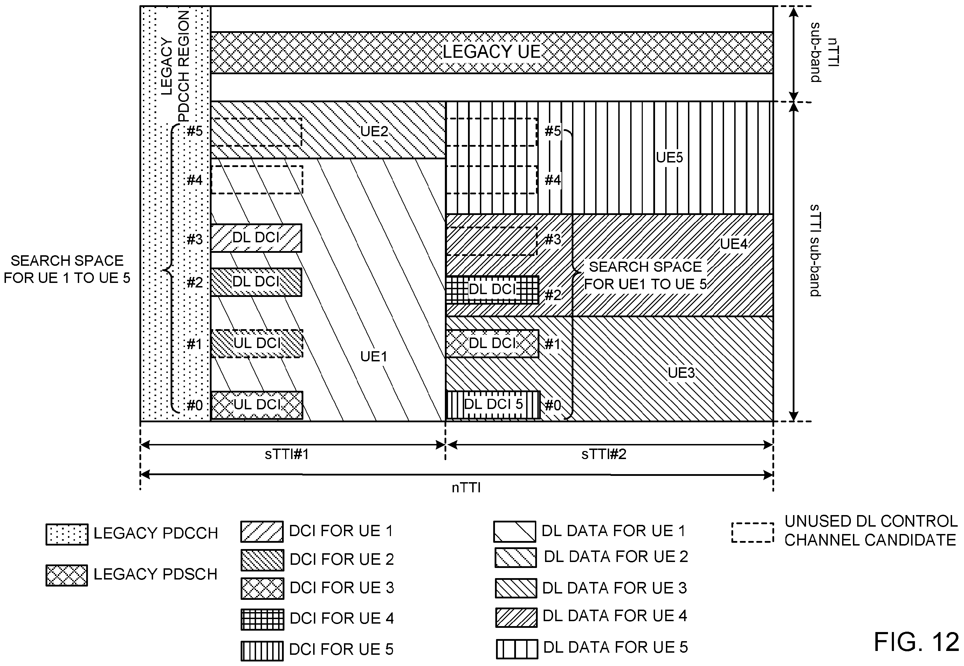

FIG. 12 is a diagram to show an example of allocation of DL data according to the fourth example. FIG. 12 show TTIs that are shorter than 1 ms (referred to as "sTTIs," "short TTIs," etc.), provided in a 1-ms TTI (referred to as an "nTTI," a "normal TTI," etc.). Note that, although FIG. 12 shows sTTIs of 0.5 ms, the configuration of sTTIs is not limited to this.

Also, although FIG. 12 shows an example in which DL data is mapped or not mapped to unused DL control channel candidates in sTTIs, but this by no means limits the DL control channel candidates that may be applied to the fourth example. The fourth example can be applied not only to DL control channel candidates in sTTIs, but can also be suitably applied to DL control channel candidates in nTTIs (for example, unused DL control channel candidates in the legacy PDCCH field of FIG. 12).

For example, FIG. 12 shows search spaces, in sTTI #1 and #2, that are shared by user terminals 1 to 5, and these search spaces are each comprised of multiple DL control channel candidates (here, six DL control channel candidates). Each prospective DL control channel is assigned an index number.

For example, referring to sTTI #1 in FIG. 12, the DCI that is mapped to prospective DL control channel # 3 allocates (schedules) DL data for user terminal 1 to the resource where this prospective DL control channel #3 is included. In this case, user terminal 1 may assume that DCIs for other user terminals are mapped (in other words, DL data for user terminal #1 is not mapped) to DL control channel candidates #0 to #2, the index numbers of which are smaller than that of prospective DL control channel #3 in the assignment resource for this DL data. On the other hand, user terminal 1 may assume that this DL data is mapped to prospective DL control channel #4, the index number of which is larger than that of prospective DL control channel #3 in the assignment resource for this DL data.

Also, looking at sTTI #1 of FIG. 12, the DCI mapped to prospective DL control channel #2 allocates (schedules) DL data for user terminal 2 to resource where this prospective DL control channel #2 is not included. In this case, user terminal 2 may assume that the DL data is mapped to prospective DL control channel #5 in the assignment resource for this DL data.

Similarly, in sTTI #2 of FIG. 12, the DCI mapped to prospective DL control channel #1 allocates DL data for user terminal 3 to the resource where this prospective DL control channel #1 is included. In this case, user terminal 3 may assume that DCI for another user terminal is mapped (in other words, DL data for user terminal 3 is not mapped) to prospective DL control channel #0 in the assignment resource for this DL data.

Also, in sTTI #2 of FIG. 12, the DCI mapped to prospective DL control channel #2 allocates DL data for user terminal 4 to the resource where this prospective DL control channel #2 is included. In this case, user terminal 4 may assume that this DL data is mapped to prospective DL control channel #3 in the assignment resource for this DL data.

Similarly, in sTTI #2 of FIG. 12, the DCI mapped to prospective DL control channel #0 allocates DL data for user terminal 5 to resource where this prospective DL control channel #0 is not included. In this case, user terminal 5 assumes that the DL data is mapped to prospective DL control channel #4 and #5 in the assignment resource for this DL data.

As described above, according to the fourth example, a user terminal can identify, based on in which prospective DL data channel DCI to designate assignment resources for DL data for a user terminal is detected, prospective unused DL data channels in the assignment resource. Consequently, it is possible to identify unused DL control channel candidates without providing a new field in DCI.

(Radio Communication System)

Now, the structure of a radio communication system according to the present embodiment will be described below. In this radio communication system, each radio communication method according to the above-described aspects is employed. Note that the radio communication methods according to the herein-contained examples of the present invention may be applied individually, or may be combined and applied.

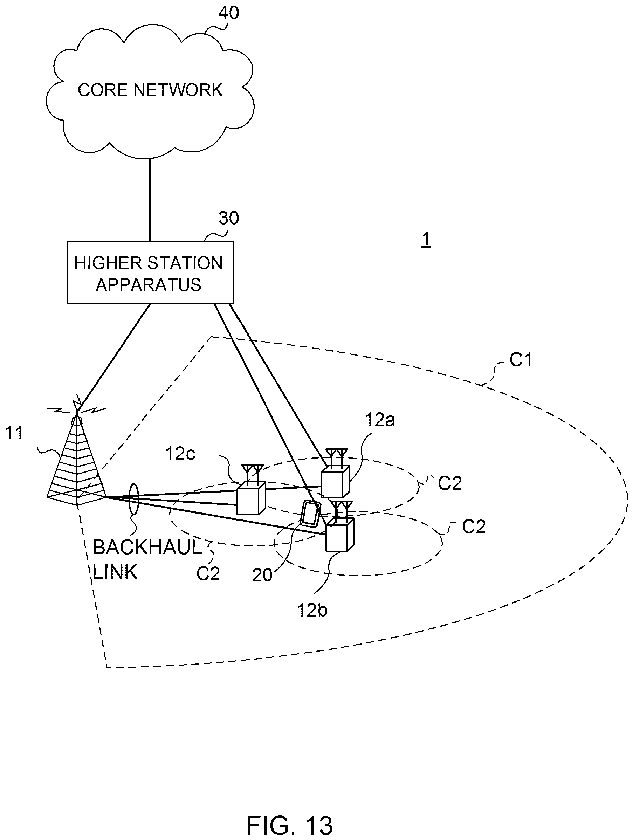

FIG. 13 is a diagram to show an exemplary schematic structure of a radio communication system according to an embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be also referred to as "SUPER 3G," "LTE-A (LTE-Advanced)," "IMT-Advanced," "4G," "5G," "FRA (Future Radio Access)," "NR (New RAT (New Radio Access Technology))," and so on.

The radio communication system 1 shown in FIG. 13 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A configuration to apply different numerologies between cells and/or within cells may be adopted.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells.

Furthermore, the user terminals 20 can communicate by using time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Furthermore, in each cell (carrier), a single numerology may be employed, or a plurality of different numerologies may be employed. Here, "numerology" refers to communication parameters that are found in the frequency direction and/or the time direction (for example, at least one of subcarrier spacing, the bandwidth, the duration of symbols, the duration of CPs, the length of TTIs, the number of symbols per TTI, the radio frame structure, the filtering process, the windowing process and so forth).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the configurations of the frequency band for use in each radio base station are by no means limited to these.

A structure may be employed here, in which wire connection (for example, optical fiber, which is in compliance with the CPRI (Common Public Radio Interface), the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmission/reception point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in UL.

In a radio communication system 1, a DL shared channel (PDSCH (Physical Downlink Shared CHannel), which is also referred to as a "DL data channel," and so on), which is shared by each user terminal 20, a broadcast channel (PBCH (Physical Broadcast CHannel)), L1/L2 control channels and/or other channels are used as DL channels. User data, higher layer control information, SIBs (System Information Blocks) and so on are communicated by the PDSCH. Also, the MIB (Master Information Block) is communicated in the PBCH.

The L1/L2 control channels include a DL control channel (PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated by using at least one of the PHICH, the PDCCH and the EPDCCH.

In the radio communication system 1, a UL shared channel (PUSCH (Physical Uplink Shared CHannel), which is also referred to as a "UL shared channel" and so on), which is shared by each user terminal 20, an UL control channel (PUCCH (Physical Uplink Control CHannel)), a random access channel (PRACH (Physical Random Access CHannel)) and so on are used as UL channels. User data, higher layer control information and so on are communicated by the PUSCH. Uplink control information (UCI), including at least one of retransmission control information (A/N) for DL signals, channel state information (CSI) and so on, is communicated in the PUSCH or the PUCCH. By means of the PRACH, random access preambles for establishing connections with cells are communicated.

(Radio Base Station)

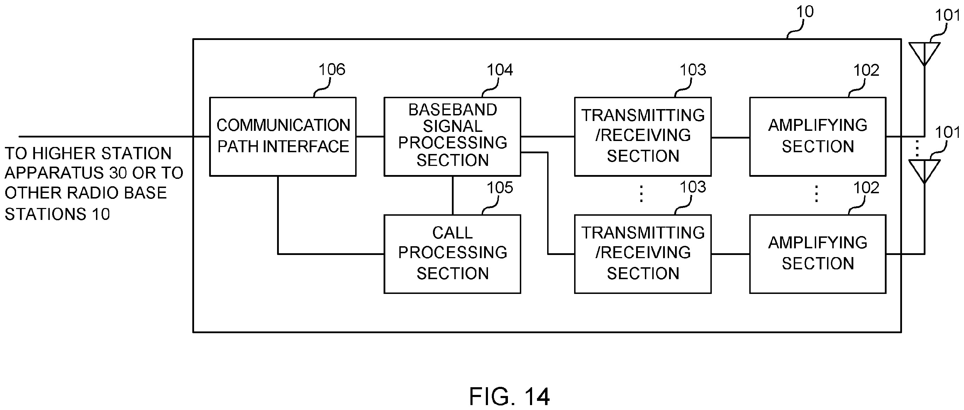

FIG. 14 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including, for example, a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to the transmitting/receiving sections 103. Furthermore, downlink control signals are also subjected to transmission processes such as channel coding and/or an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing, including setting up and releasing communication channels, manages the status of the radio base station 10, manages radio resources, and so on.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, optical fiber, which is in compliance with the CPRI (Common Public Radio Interface), the X2 interface, etc.).

In addition, the transmitting/receiving sections 103 transmit a DL control channel and a DL data channel. Here, the DL control channel is mapped to a prospective DL control channel (prospective resource) in a search space. Also, the transmitting/receiving sections 103 may transmit a higher layer parameter that is used to select a number of DL control channel candidates that constitute a search space. Also, the transmitting/receiving sections 103 may transmit a parameter for use for scrambling DCI CRC bits.

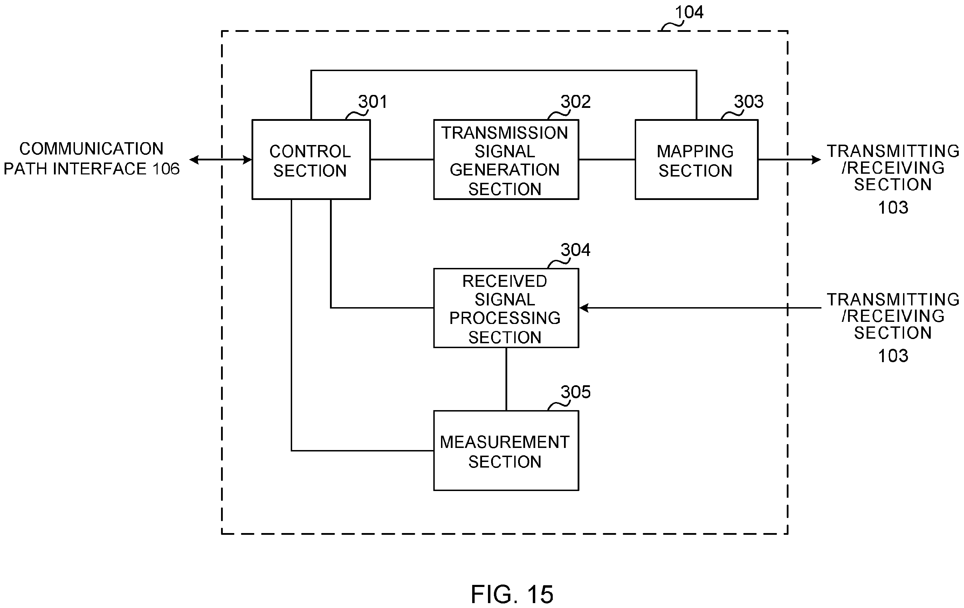

FIG. 15 is a diagram to show an exemplary functional structure of a radio base station according to the present embodiment. Note that, although FIG. 15 primarily shows functional blocks that pertain to characteristic parts of the present embodiment, the radio base station 10 has other functional blocks that are necessary for radio communication as well. As shown in FIG. 15, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, generation of DL signals in the transmission signal generation section 302, mapping of DL signals in the mapping section 303, UL signal receiving processes (for example, demodulation) in the received signal processing section 304, measurements in the measurement section 305 and so on.

The control section 301 schedules DL data channels and UL data channels for user terminals 20. The control section 301 exerts control so that DCI (DL assignments) to contain DL data channel scheduling information and/or DCI (UL grants) to contain UL data channel scheduling information are mapped to DL control channel candidates (for example, prospective DL control channel resources) in a search space and transmitted.

Also, the control section 301 may exert control so that a higher layer parameter for use for selecting multiple DL control channel candidates (candidate resources) for constituting a search space is selected, and this higher layer parameter is transmitted (first example). The control section 301 may select a value that applies in common to one or more user terminals that share a plurality of DL control channel candidates, as the higher layer parameter.

In addition, the control section 301 may exert control so that CRC bits that are scrambled (masked) based on a predetermined parameter are attached to DCI, and the DCI is transmitted (second example). This predetermined parameter may be any one of a UE-specific ID, a system-common ID, and the above-mentioned higher layer parameter.

Also, the control section 301 may include, in the above DCI, a given field value that indicates to which user terminal the DCI is addressed (second example). The given field value may be a 16-bit C-RNTI, or may be the value of the number of bits to be configured based on the number of DL control channel candidates in the search space.

Furthermore, in the event a DL data channel is allocated to (scheduled in) resources where the above search space is included, the control section 301 may map the DL data channel to resources apart from the multiple DL control channel candidates in the assignment resources (first example).

Also, in the event a DL data channel is allocated to (scheduled in) resources where the above search space is included, the control section 301 may map the DL data channel to resources among these DL control channel candidates where no DCI is detected (second example).

In addition, the control section 301 may exert control so that first-level DCI, which specifies unused DL control channel candidates in the search space, and second-level DCI, which is user terminal 20-specific, are transmitted (third example).

Also, depending on in which prospective DL control channel DCI for a user terminal 20 is detected, the control section 301 may determine whether or not DL data is mapped to a prospective DL control channel in the assignment resources designated by that DCI (fourth example). Also, based on whether or not DCI (DL assignment and/or UL grant) is detected in a prospective DL control channel in the assignment resources for the DL data channel, the control section 301 may determine whether or not to map the DL data channel to a prospective DL control channel in the assignment resources where no DCI is detected (fourth example).

The control section 301 can be constituted by a controller, a control circuit or control apparatus that can be described based on general understanding of the technical field to which the present invention pertains.

The transmission signal generation section 302 generates DL signals (including DL data channels (DL data), DL control channels (DCI), DL reference signals and so on) based on commands from the control section 301, and outputs these signals to the mapping section 303. The transmission signal generation section 302 can be constituted by a signal generator, a signal generation circuit or signal generation apparatus that can be described based on general understanding of the technical field to which the present invention pertains.

The mapping section 303 maps the DL signals generated in the transmission signal generation section 302 to predetermined radio resources as commanded by the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding, etc.) for UL signals transmitted from the user terminals 20 (including, for example, UL data channels, UL control channels, UL control signals, etc.).

The measurement section 305 conducts measurements with respect to the received signals. The measurement section 305 can be constituted by a measurer, a measurement circuit or measurement apparatus that can be described based on general understanding of the technical field to which the present invention pertains.

(User Terminal)

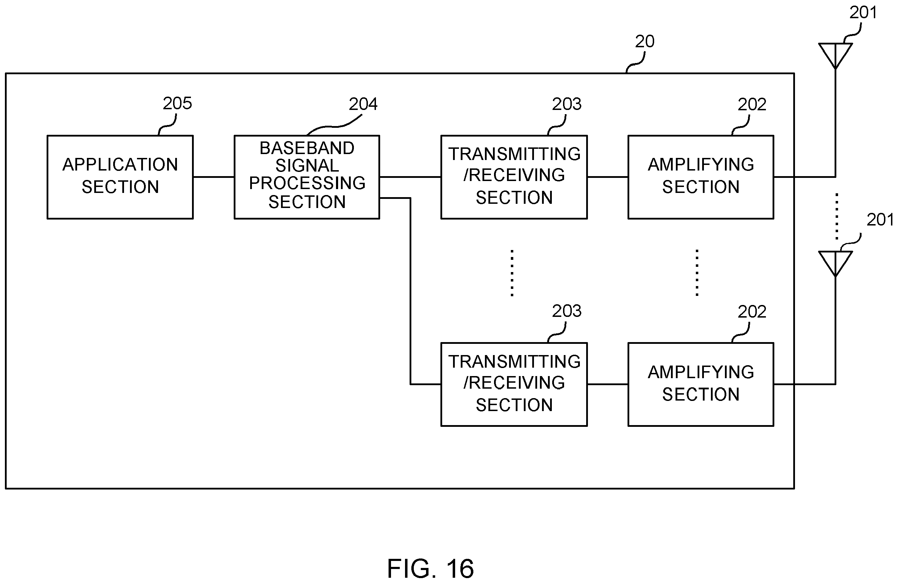

FIG. 16 is a diagram to show an exemplary overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, an FFT process, error correction decoding, a retransmission control receiving process and so on. DL data is forwarded to the application section 205. The application section 205 performs processes related to higher layers above the physical layer and the MAC layer, and so on. Also, the broadcast information is also forwarded to application section 205.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, a DFT process, an IFFT process and so on, and forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, the transmitting/receiving sections 203 receive a DL control channel and a DL data channel. Here, the DL control channel may be mapped to a prospective DL control channel (prospective resource) in a search space. Also, the transmitting/receiving sections 203 may receive a higher layer parameter that is used to select a number of DL control channel candidates that constitute a search space. Also, the transmitting/receiving sections 203 may receive a parameter for use for scrambling DCI CRC bits.

The transmitting/receiving sections 203 can be constituted by transmitters/receivers, transmitting/receiving circuits or transmitting/receiving apparatus that can be described based on general understanding of the technical field to which the present invention pertains. Furthermore, a transmitting/receiving section 203 may be structured as one transmitting/receiving section, or may be formed with a transmitting section and a receiving section.

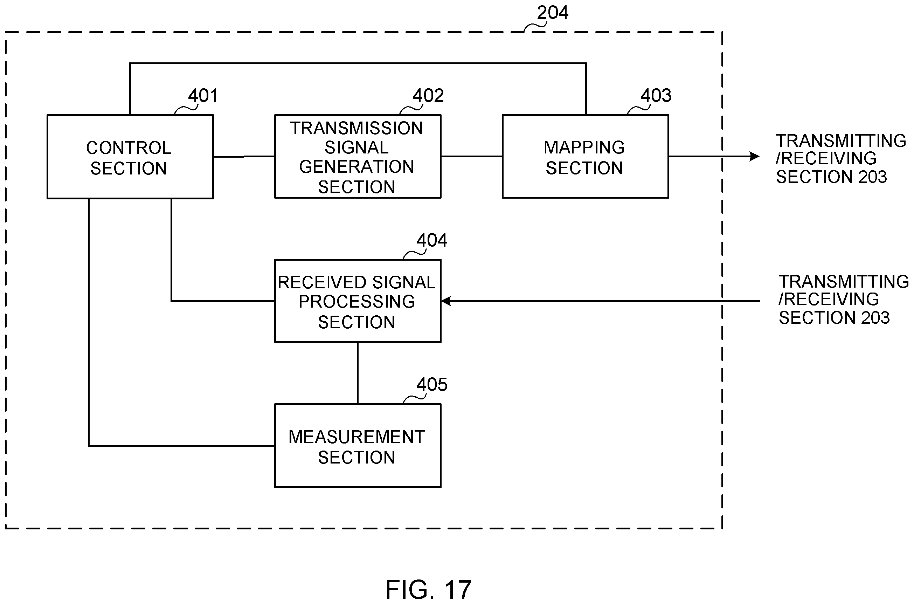

FIG. 17 is a diagram to show an exemplary functional structure of a user terminal according to the present embodiment. Note that, although FIG. 17 primarily shows functional blocks that pertain to characteristic parts of the present embodiment, the user terminal 20 has other functional blocks that are necessary for radio communication as well. As shown in FIG. 17, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, the generation of UL signals in the transmission signal generation section 402, the mapping of UL signals in the mapping section 403, the DL signal receiving processes in the received signal processing section 404, the measurements in the measurement section 405 and so on.

The control section 401 controls the receipt of DL data channels and transmission of UL data channels based on DCI (DL assignment and/or UL grant) for the user terminal 20. To be more specific, the control section 401 blind-detects a plurality of DL control channel candidates (candidate resources) in a search space, and detects DCI for the user terminal 20.

In addition, the control section 401 may select a plurality of DL control channel candidates (candidate resources) to constitute a search space, based on a higher layer parameter from the radio base station 10 (first example). This higher layer parameter may be a value that applies in common to one or more user terminals that share a plurality of DL control channel candidates.

In addition, the control section 401 may control the received signal processing section 404 to detect DCI, to which CRC bits that are scrambled (masked) based on a predetermined parameter are attached, based on a CRC check using the predetermined parameter (second example). The predetermined parameter may be any one of a UE-Specific ID, a system-common ID, and the above-noted higher layer parameter.

In addition, the control section 401 may control the received signal processing section 404 to detect DCI for the user terminal 20 based on a given field value contained in the above DCI (second example). This given field value may be a 16-bit C-RNTI, or may be value of the number of bits to be configured based on the number of DL control channel candidates in the search space.

Also, when the assignment resources for a DL data channel that are designated by the above DCI include the above search space, the control section 401 assumes that the DL data channel is mapped to resources apart from the multiple DL control channel candidates in the assignment resources (first example).

Also, if the assignment resources for the DL data channel, designated by the above DCI, include the above search space, the control section 301 may assume that the DL data channel is also mapped to resources in these DL control channel candidates where no DCI is detected (second example).

Also, the control section 401 may select the resource for mapping the DL data channel based on first-level DCI, which specifies unused DL control channel candidates in the search space, and second-level DCI, which is user terminal 20-specific (third example).

Also, depending on in which prospective DL control channel DCI for the user terminal 20 is detected, the control section 401 determines whether or not DL data is mapped to a prospective DL control channel in the assignment resources designated by that DCI (fourth example). Also, based on whether or not DCI (DL assignment and/or UL grant) is detected in a prospective DL control channel in the assignment resources for the DL data channel, the control section 401 may determine whether or not to map the DL data channel to a prospective DL control channel in the assignment resources where no DCI is detected (fourth example).

The control section 401 can be constituted by a controller, a control circuit or control apparatus that can be described based on general understanding of the technical field to which the present invention pertains.

In the transmission signal generation section 402, UL signals (including UL data signals, UL control signals, UL reference signals, UCI, etc.) are generated (through, for example, encoding, rate matching, puncturing, modulation, and so on) as commanded by the control section 401, and output to the mapping section 403. The transmission signal generation section 402 can be constituted by a signal generator, a signal generation circuit or signal generation apparatus that can be described based on general understanding of the technical field to which the present invention pertains.

The mapping section 403 maps the UL signals generated in the transmission signal generation section 402 to radio resources as commanded by the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding, etc.) for DL signals (DL data channels (DL data), DL control channels (DCI), DL reference signals, etc.). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

(Hardware Structure)

Note that the block diagrams that have been used to describe the above embodiment show blocks in functional units. These functional blocks (components) may be implemented in arbitrary combinations of hardware and/or software. Also, means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

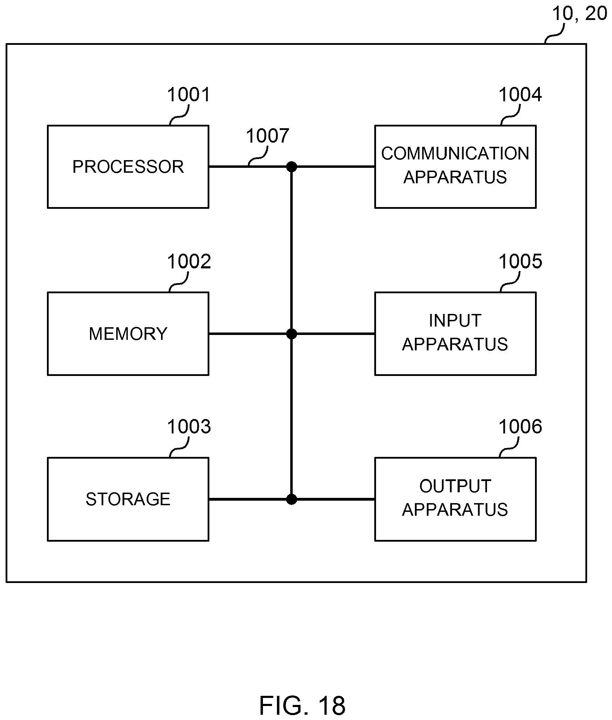

That is, a radio base station, a user terminal and so on according to an embodiment of the present invention may function as a computer that executes the processes of the radio communication method of the present invention. FIG. 18 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by, for example, reading predetermined software (program) on hardware such as the processor 1001 and the memory 1002, and controlling the processor 1001 to do calculations, the communication apparatus 1004 to communicate, the memory 1002 and the storage 1003 to read and/or write data, and so on.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and the like for implementing the radio communication methods according to one embodiment of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be comprised of a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

(Variations)

Note that the terminology used in this specification and/or the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot, a minislot and a symbol all represent the time unit in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. The unit to represent a TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this. The TTI may be the transmission time unit of channel-encoded data packets (transport blocks), or may be the unit of processing in scheduling, link adaptation and so on.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "shortened subframe," a "short subframe," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource region of one subcarrier and one symbol.

Note that the structures of radio frames, subframes, slots, symbols and so on described above are merely examples. For example, configurations pertaining to the number of subframes included in a radio frame, the number of slots per subframe, the number of symbols and RBs included in a slot, the number of subcarriers included in an RB, the number of symbols in a TTI, the symbol duration, the length of cyclic prefixes (CPs) and so on can be variously changed.

Also, the information and parameters described in this specification may be represented in absolute values, may be represented in relative values with respect to predetermined values, or may be represented using other applicable information. For example, radio resources may be specified by predetermined indices. In addition, these parameters may be used in equations and/or the like apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or attached. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access." As used herein, when two elements may be considered "connected" or "coupled" to each other by using one or more electrical wires, cables and/or printed electrical connections, and, to name a number of non-limiting and non-inclusive examples, electromagnetic energy having wavelengths in the radio frequency region, the microwave region and/or the optical (both visible and invisible) region may be used.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

**Claims**

**1.** A computer apparatus (20) comprising:

a receiving section (203) configured to receive downlink control information, DCI, by monitoring a plurality of downlink, DL, control channel candidates of different aggregation levels;

a control section (401) configured to, when the DCI is detected in a DL control channel candidate of a specific aggregation level, further **characterized by** being configured to determine that a DL data channel scheduled by the DCI is mapped to resources other than resources corresponding to a DL control channel candidate of another aggregation level; and

an output apparatus (1006) configured to output information,

wherein the receiving section (203) is further configured to receive, based on the determined resources, the DL data channel scheduled by the DCI.

2. The apparatus (20) according to claim 1, wherein the output apparatus (1006) is at least one of a display and a speaker, and/or the output apparatus (1006) is provided as a touch panel.

3. A system (1) comprising:

a computer apparatus (20) that comprises:

a receiving section (203) configured to receive downlink control information, DCI, by monitoring a plurality of downlink, DL, control channel candidates of different aggregation levels;

a control section (401) configured to, when the DCI is detected in a DL control channel candidate of a specific aggregation level, further **characterized by** being configured to determine that a DL data channel scheduled by the DCI is mapped to resources other than resources corresponding to a DL control channel candidate of another aggregation level; and

an output apparatus (1006) configured to output information,

wherein the receiving section (203) is further configured to receive, based on the determined resources, the DL data channel scheduled by the DCI; and

a radio base station (10) that comprises a transmitting section (103) configured to transmit the DL data channel.

**Patentansprüche**

1. Computervorrichtung (20), die umfasst:

einen Empfangsabschnitt (203), der so konfiguriert ist, dass er eine Abwärtsverbindungssteuerinformation, DCI, durch Überwachen einer Vielzahl von Abwärtsverbindungs-, DL, Steuerkanalkandidaten verschiedener Aggregationsstufen empfängt;

einen Steuerabschnitt (401), der so konfiguriert ist, dass er, wenn die DCI in einem DL-Steuerkanalkandidaten einer bestimmten Aggregationsstufe detektiert wird, weiter **dadurch gekennzeichnet ist, dass** er so konfiguriert ist, dass er bestimmt, dass ein durch die DCI geplanter DL-Datenkanal anderen Ressourcen als die einem DL-Steuerkanalkandidaten einer anderen Aggregationsstufe entsprechenden Ressourcen zugeordnet wird; und

eine Ausgabevorrichtung (1006), die so konfiguriert ist, dass sie eine Information ausgibt,

wobei der Empfangsabschnitt (203) weiter so konfiguriert ist, dass er auf der Grundlage der bestimmten Ressourcen den von der DCI geplanten DL-Datenkanal empfängt.

2. Vorrichtung (20) nach Anspruch 1, wobei die Ausgabevorrichtung (1006) mindestens eines von einer Anzeige und einem Lautsprecher ist und/oder die Ausgabevorrichtung (1006) als ein Touchpanel bereitgestellt ist.

3. System (1), das umfasst:

eine Computervorrichtung (20), die umfasst:

einen Empfangsabschnitt (203), der so konfiguriert ist, dass er eine Abwärtsverbindungssteuerinformation, DCI, durch Überwachen einer Vielzahl von Abwärtsverbindungs-, DL, Steuerkanalkandidaten verschiedener Aggregationsstufen empfängt;

einen Steuerabschnitt (401), der so konfiguriert ist, dass er, wenn die DCI in einem DL-Steuerkanalkandidaten einer bestimmten Aggregationsstufe detektiert wird, weiter **dadurch gekennzeichnet ist, dass** er so konfiguriert ist, dass er bestimmt, dass ein durch die DCI geplanter DL-Datenkanal anderen Ressourcen als die einem DL-Steuerkanalkandidaten einer anderen Aggregationsstufe entsprechenden Ressourcen zugeordnet wird; und

eine Ausgabevorrichtung (1006), die so konfiguriert ist, dass sie eine Information ausgibt,

wobei der Empfangsabschnitt (203) weiter so konfiguriert ist, dass er auf der Grundlage der bestimmten Ressourcen den von der DCI geplanten DL-Datenkanal empfängt; und

eine Funkbasisstation (10), die einen Sendeabschnitt (103) umfasst, der so konfiguriert ist, dass er den DL-Datenkanal überträgt.

**Revendications**

1. Appareil informatique (20) comprenant :

   une section de réception (203) configurée pour recevoir des informations de commande de liaison descendante, DCI, par surveillance d'une pluralité de candidats de canal de commande de liaison descendante, DL, de différents niveaux d'agrégation ;
   une section de commande (401) configurée pour, lorsque les DCI sont détectées dans un candidat de canal de commande de DL d'un niveau d'agrégation spécifique, en outre **caractérisée par** le fait d'être configurée pour déterminer qu'un canal de données de DL planifié par les DCI est mis en correspondance avec des ressources autres que les ressources correspondant à un candidat de canal de commande de DL d'un autre niveau d'agrégation ; et
   un appareil de sortie (1006) configuré pour délivrer en sortie des informations,
   dans lequel la section de réception (203) est en outre configurée pour recevoir, sur la base des ressources déterminées, le canal de données de DL planifié par les DCI.

2. Appareil (20) selon la revendication 1, dans lequel l'appareil de sortie (1006) est au moins l'un d'un dispositif d'affichage et d'un haut-parleur, et/ou l'appareil de sortie (1006) est fourni sous la forme d'un panneau tactile.

3. Système (1) comprenant :

   un appareil informatique (20) qui comprend :

      une section de réception (203) configurée pour recevoir des informations de commande de liaison descendante, DCI, par surveillance d'une pluralité de candidats de canal de commande de liaison descendante, DL, de différents niveaux d'agrégation ;
      une section de commande (401) configurée pour, lorsque les DCI sont détectées dans un candidat de canal de commande de DL d'un niveau d'agrégation spécifique, en outre **caractérisée par** le fait d'être configurée pour déterminer qu'un canal de données de DL planifié par les DCI est mis en correspondance avec des ressources autres que les ressources correspondant à un candidat de canal de commande de DL d'un autre niveau d'agrégation ; et
      un appareil de sortie (1006) configuré pour délivrer en sortie des informations,
      dans lequel la section de réception (203) est en outre configurée pour recevoir, sur la base des ressources déterminées, le canal de données de DL planifié par les DCI ; et

   une station de base radio (10) qui comprend une section de transmission (103) configurée pour transmettre le canal de données de DL.

## FIG. 1A

DL CCH REGION

DCI FOR UE 1

DCI FOR UE 2

DCI FOR UE 3

DL DATA FOR UE 1

## FIG. 1B

DL CCH REGION

SEARCH SPACE FOR UE 1

SEARCH SPACE FOR UE 2

SEARCH SPACE FOR UE 3

DCI FOR UE 1

DCI FOR UE 2

DCI FOR UE 3

DL DATA FOR UE 1

DL CCH REGION

SEARCH SPACE FOR UE 1 TO UE 3

DCI FOR UE 1

DCI FOR UE 2

DL DATA FOR UE 1

FIG. 2

FIG. 3A

DL CCH REGION

SEARCH SPACE 1 FOR UE 1 TO UE 3

SEARCH SPACE 2 FOR UE 4 TO UE 6

DCI FOR UE 1

DCI FOR UE 2

DCI FOR UE 3

DL DATA

FIG. 3B

DL CCH REGION

SEARCH SPACE 1 FOR UE 1 TO UE 3

SEARCH SPACE 2 FOR UE 4 TO UE 6

SEARCH SPACE 3 FOR UE 7 TO UE 9

DCI FOR UE 1

DCI FOR UE 2

DCI FOR UE 3

DL DATA

# FIG. 4A

|  | GIVEN FIELD | CRC |
|---|---|---|

DCI

↑ SCRAMBLED BY GROUP-COMMON INFORMATION

EP 4 033 690 B1

# FIG. 4B

SEARCH SPACE FOR UE 1 TO UE 3

GIVEN FIELD VALUE IN DCI EXPLICITLY INDICATES THIS DCI IS ADDRESSED TO UE 3

GIVEN FIELD VALUE IN DCI EXPLICITLY INDICATES THIS DCI IS ADDRESSED TO UE 1

DCI FOR UE 1

DCI FOR UE 3

FIG. 5A

SEARCH SPACE FOR UE 1
TO UE 4

SEARCH SPACE FOR UE 1
TO UE 4

{10}    {00}    {01}    {11}

FIG. 5B

| BIT VALUE OF GIVEN FIELD | UE INDEX |
|---|---|
| 00 | UE1 |
| 01 | UE2 |
| 10 | UE3 |
| 11 | UE4 |

FIG. 6A

DL CCH REGION

SEARCH SPACE FOR UE 1 TO UE 3

DCI FOR UE 1

DCI FOR UE 3

DL DATA

FIG. 6B

DL CCH REGION

SEARCH SPACE FOR UE 1 TO UE 3

DCI FOR UE 2

DCI FOR UE 3

DL DATA

## FIG. 7A

DL CCH REGION

CONFIGURATION 1

CONFIGURATION 2

SEARCH SPACE FOR UE 1 TO UE 3

| | DCI FOR UE 1 | | DCI FOR UE 2 |
| | DCI FOR UE 3 | | DL DATA FOR UE 1 |

## FIG. 7B

DL CCH REGION

CONFIGURATION 1

CONFIGURATION 2

SEARCH SPACE FOR UE 1 TO UE 3

| | DCI FOR UE 1 | | DCI FOR UE 2 |
| | DCI FOR UE 3 | | DL DATA FOR UE 1 |

| CONFIGURATION | AGGREGATION LEVEL | NUMBER OF TIMES OF BLIND DECODING |
|---|---|---|
| 1 | 2 | 3 |
| 2 | 4 | 3 |

FIG. 8

## FIG. 9A

DL CCH REGION

SEARCH SPACE FOR UE 1 TO UE 3

DECODING OF DL DATA FAILS

▨ DCI FOR UE 1

▨ DCI FOR UE 3        ⬚ DL DATA FOR UE 1

## FIG. 9B

DL CCH REGION

SEARCH SPACE FOR UE 1 TO UE 3

DL DATA MAPPED APART FROM DL CCH CANDIDATE IS STORED IN SOFT BUFFER

▨ DCI FOR UE 1

▨ DCI FOR UE 3        ⬚ DL DATA FOR UE 1

FIG. 10A

DL CCH REGION

SEARCH SPACE FOR UE 1 TO UE 3

DCI FOR UE 1

DCI FOR UE 3          DL DATA FOR UE 1

FIG. 10B

DL CCH REGION

SEARCH SPACE FOR UE 1 TO UE 3

DCI FOR UE 1

DCI FOR UE 3          DL DATA FOR UE 1

DL CCH REGION

#0 #1 #2

SEARCH SPACE FOR UE 1 TO
UE 3 (MULTIPLE DL CCH
CANDIDATES FOR SECOND-
LEVEL DCI)

|||||| FIRST-LEVEL DCI

///// SECOND-LEVEL DCI FOR UE 1

⊠ SECOND-LEVEL DCI FOR UE 3

⠿ DL DATA FOR UE 1

FIG. 11

FIG. 12

LEGACY PDCCH REGION

SEARCH SPACE FOR UE 1 TO UE 5

nTTI sub-band

sTTI sub-band

LEGACY UE

#5 UE2
#4
#3 DL DCI
#2 DL DCI
#1 UL DCI
#0 UL DCI

UE1

#5 UE5
#4
#3 SEARCH SPACE FOR UE1 TO UE 5
#2 DL DCI
#1 DL DCI
#0 DL DCI 5

UE4

UE3

sTTI#1  sTTI#2

nTTI

| | LEGACY PDCCH | | DCI FOR UE 1 | | DL DATA FOR UE 1 | | UNUSED DL CONTROL CHANNEL CANDIDATE |
| | LEGACY PDSCH | | DCI FOR UE 2 | | DL DATA FOR UE 2 | | |
| | | | DCI FOR UE 3 | | DL DATA FOR UE 3 | | |
| | | | DCI FOR UE 4 | | DL DATA FOR UE 4 | | |
| | | | DCI FOR UE 5 | | DL DATA FOR UE 5 | | |

EP 4 033 690 B1

FIG. 13

EP 4 033 690 B1

TO HIGHER STATION
APPARATUS 30 OR TO
OTHER RADIO BASE
STATIONS 10

| | 106 | 104 | 103 | 102 |
|---|---|---|---|---|
| | COMMUNICATION PATH INTERFACE | BASEBAND SIGNAL PROCESSING SECTION | TRANSMITTING /RECEIVING SECTION | AMPLIFYING SECTION |

10

101

101

101

105

| CALL PROCESSING SECTION | TRANSMITTING /RECEIVING SECTION | AMPLIFYING SECTION |
|---|---|---|

103

102

FIG. 14

FIG. 15

EP 4 033 690 B1

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016122242 A1

**Non-patent literature cited in the description**

- Performance Study of an Enhanced Downlink Control Channel Design for LTE. **EINHAUS M.** 2012 IEEE 75TH VEHICULAR TECHNOLOGY CONFERENCE. VTC SPRING, 2012, 1-5

- Evolved Universal Terrestrial Radio Access (E-UTRA) and Evolved Universal Terrestrial Radio Access Network (E-UTRAN); Overall Description; Stage 2 (Release 8). 3GPP TS 36.300 V8.12.0. April 2010